# EUROPEAN PATENT APPLICATION

(11) **EP 4 684 943 A1**
(43) Date of publication of application: **28.01.2026**
(21) Application number: 24382809.2
(22) Date of filing: 24.07.2024
(51) Int. Cl.: B29C 65/18, B29C 65/78, B29C 65/00, B29K 105/00, B29L 31/00, B65B 9/067, B65B 51/16, B65B 51/26

(54) **SEALING DEVICE, TUBULAR BAG PACKAGING MACHINE AND METHOD FOR PRODUCING A SEALED SEAM**

(71) Applicant: MULTIVAC Sepp Haggenmüller SE & Co. KG, 87787 Wolfertschwenden (DE)
(72) Inventor: SERRANO, Jónathan, 08397 Pineda de Mar (Barcelona) (ES); DELGADO, Samuel, 17300 Blanes (ES); COLOMER, Carles, 17300 Blanes (ES)
(74) Representative: Grünecker Patent- und Rechtsanwälte PartG mbB

(57) **Abstract**

A sealing device (102) for producing a sealed seam (156) on a packaging material (150) comprises: a pair of heated sealing rollers (300) for providing the sealed seam (156) in the packaging material (150), and a pair of non-heated conveyor rollers (400), which comprises a cylindrical conveying surface (403, 404) for moving the packaging material (150) along a running direction (T) of the sealing device (102). At least one of the pair of non-heated conveyor rollers (400) comprises an inclined folding surface (405, 406) for folding the sealed seam (156). The inclined folding surface (405, 406) is inclined relative to the cylindrical conveying surface (403, 404).

## Description

The present invention relates to a sealing device, a tubular bag packaging machine comprising a sealing device or a method for producing a sealed seam on a packaging material.

### Prior Art

Methods and devices for sealing various kinds of packaging materials have been known for several years. There are different concepts of how a packaging material, like a plastic foil, can be wrapped around a product. One of those approaches is to use a sheet-like packaging material and wrap it around a product so that the sheet-like packaging material is closed around the product forming a fin by the edges of the packaging material. This fin can then be sealed by pressing together the edges of the packaging material forming the fin and at the same time applying heat so that the packaging material melts locally and a seal is created.

For example, EP 2 931 495 A1 relates to a longitudinal sealing device for producing a longitudinal sealed seam on a packaging material. The longitudinal sealing device comprises a pair of heated sealing rollers for providing the longitudinal sealed seam between two layers of the packaging material and a pair of non-heated of conveyor rollers for moving the packaging material. The sealing rollers are arranged offset to the conveyor rollers in a direction perpendicular to a conveying plane of the packaging material.

EP 4 166 306 A1 provides a sealing machine with a pair of tracking rollers and a pair of heating rollers, wherein the pair of tracking rollers and the pair of heating rollers are driven independently.

EP 4 166 464 A1 teaches an unwinding device as well as a method for controlling the position of a sheet-like sealing material for a sealing machine.

From EP 4 166 462 A1 a sealing machine and a method for adjusting characteristics of the sealing machine are known. Based on the measuring of the dimensions of a product with a sensor, at least one characteristic of a forming set and/or a sealing station of the sealing machine is controlled.

The disadvantage of the prior art is that the sealed seam or fin is directed perpendicular to the conveying plane of the packaging material and therefore perpendicular to the package. It is not possible to control an orientation of the fin relative to the package. Consequently, the fin can be deformed or crushed when handling the package. This can have a negative effect on the aesthetic of the manufactured packaging. In the worst case, the fin or the package as a whole may be damaged.

### Object

Based on the known prior art, the technical problem to be solved is to provide a device or method for producing a sealed seam on a packaging material, which enables to control the orientation of the sealed seam relative to the packaging.

### Summary

According to the invention, this object is solved by a sealing device according to claim 1, a tubular bag packaging machine comprising a sealing device according to claim 13 and/or a method for producing a sealed seam on a packaging material according to claim 14.

Advantageous further embodiments of the invention are covered by the depending claims.

One aspect of the invention relates to a sealing device for producing a sealed seam on a packaging material, wherein the sealing device comprises a pair of heated sealing rollers for providing the sealed seam in the packaging material, and a pair of non-heated conveyor rollers, which comprises a cylindrical conveying surface for moving the packaging material along a running direction of the sealing device. At least one of the pair of non-heated conveyor rollers comprises an inclined folding surface for folding the sealed seam. The inclined folding surface is inclined relative to the cylindrical conveying surface. This enables easy and accurate folding of the sealed seam. If the sealed seam is folded and does not extend arbitrarily from the package, the package may be handled more easily. It may be prevented that the package or in particular the sealed seam is damaged, e.g. deformed or crushed, by subsequent work steps, for example, when a gripper grips the package for transportation. Optional, the aesthetic of the package formed from the packaging material may be improved, which may lead to better customer perception and acceptance.

The conveyor roller may fulfill two functions. On the one hand, it may transport the packaging material and on the other hand, it may fold the sealed seam. As a result, there is no need for an additional tool for folding the sealed seam. This may reduce the assembly space and costs as well as the complexity of the sealing device.

The packaging material may be formed to a package. The packaging material and/or the package may comprise a tubular portion. A product may be provided in the tubular portion. The packaging material and/or the package may comprise a seam portion. The seam portion may connect to the tubular portion. The sealed seam may be created in the seam portion, in particular by contacting the sealing rollers.

The packaging material may be a foil, in particular a single layer foil or a multiple layer foil. The packaging material may comprise plastic. The packaging material may be endless.

The packaging material, in particular the tubular portion and/or the seam portion may extend in the running direction. The running direction may correspond to a direction in which products to be packaged are transported in a tubular bag packaging machine. The sealed seam may be a longitudinal sealed seam. The sealed seam may extend along the running direction of the packaging material.

The sealing device may comprise one or more pairs of heated sealing rollers. The sealing rollers may be, in particular inversely, rotatable, in particular driven by a drive. The pair of heated sealing rollers may comprise two sealing rollers. Each sealing roller may have a cylindrical shape. The sealing roller may have a head edge and a base edge. The sealing roller may comprise a sealing surface. The sealing surface may extend along the cylindrical sealing roller, in particular between the head edge and the base edge. The head edge and the base edge may have a third diameter. The third diameter may be at least 60 millimeters, in particular at least 90 millimeters, in particular at least 120 millimeters, and/or at most 200 millimeters, in particular at most 175 millimeters, in particular at most 150 millimeters. The sealing surface may be heated by a heater. The sealing surface may be heated to at least a melting temperature of the packaging material.

The sealing rollers, in particular the head edge, may define a conveying plane. The conveying plane may, in particular in a side or front view, be parallel to the running direction of the sealing device. The conveying plane may, in particular in a side or front view, be perpendicular to the sealing surface. The base edge may be below the conveying plane. The sealing rollers, in particular the sealing surface, may extend below the conveying plane, wherein the head edge may be at or below the conveying plane. The sealing surface, in particular the head edge, may be located at least 1 millimeter, in particular at least 2 millimeters, and/or at most 4 millimeters, in particular at most 3 millimeters, below the conveying plane of the sealing device.

The sealing device may comprise one or more pairs of non-heated conveyor rollers. The pair of conveyor rollers may comprise two conveyor rollers. The conveyor rollers may be, in particular inversely, rotatable, in particular driven by a drive. Each conveyor roller may comprise the conveying surface and the inclined folding surface. The conveying surface may have a cylindrical shape. The inclined folding surface may have a conical shape.

Preferably, the conveying surface has a first diameter and the inclined folding surface extends, in particular, perpendicular to the running direction, from the first diameter to a second diameter, wherein the first diameter is smaller than the second diameter. This allows the packaging material, in particular the sealed seam, to be easily folded when contacting the inclined folding surface from an unfolded position to a folded position. In the unfolded position the sealed seam may be perpendicular to the running direction and, in particular approximately parallel to the conveying surface. The sealed seam may be folded from the unfolded position at an angle relative to the conveying surface. The extent of the folding may depend on the dimensions of the inclined folding surface, e.g. on the first and second diameter. The larger the second diameter is in comparison to the first diameter, the greater the folding may be. The more the sealed seam is folded, the less likely it is that the sealed seam will be damaged during handling.

Preferably, the first diameter is at least 60 millimeters, in particular at least 90 millimeters, in particular at least 125 millimeters, and/or at most 200 millimeters, in particular at most 175 millimeters, in particular at most 150 millimeters.

Preferably, the second diameter is at least 100 millimeters, in particular at least 120 millimeters, in particular at least 145 millimeters, and/or at most 300 millimeters, in particular at most 250 millimeters, in particular at most 200 millimeters.

Preferably, the second diameter is at least 20 percent, in particular at least 30 percent, in particular at least 50 percent, and/or at most 100 percent, in particular at most 80 percent, in particular at most 70 percent, larger than the first diameter.

Preferably, an inclination of the inclined folding surface, is at least 100 degrees, in particular at least 110 degrees, in particular at least 120 degrees, and/or at most 170 degrees, in particular at most 150 degrees, in particular at most 140 degrees.

Preferably, the conveying surface is, in particular in a side or front view, located above the inclined folding surface. Thus, the tubular portion may be located, in particular in a side view, above the seam portion comprising the sealed seam. This allows for producing the sealed seam on a bottom side of the tubular portion. This may positively affect the aesthetics of the produced package.

The conveyor roller may comprise a conveyor part comprising the conveying surface and a folding part comprising the inclined folding surface. The conveyor part and the folding part may be integrally formed or separate parts, which may be joined together.

The conveying surface may, in particular in a side or front view, have an upper edge and a lower edge. The upper edge and the lower edge may have the same diameter, in particular the first diameter.

The inclined folding surface may have a top edge and a bottom edge. The top edge may have the first diameter. The bottom edge may have the second diameter. The inclined folding surface may be arranged immediately adjacent to the cylindrical conveying surface. The top edge of the inclined folding surface may overlap or correspond to the lower edge of the conveying surface. Optionally the top edge of the inclined folding surface may be distanced by a gap from the lower edge of the conveying surface. In particular, when the conveyor roller is formed from the conveyor part and the folding part as separate parts, there may be a small gap between the conveyor part and the folding part due to production-related inaccuracy. The gap may be of at most five millimeters.

Preferably, the inclined folding surface is, in particular in a side or front view, located below the conveying plane of the sealing device. This may further facilitate the folding process and increase the quality of the fold. The inclined folding surface, in particular the top edge, may be located 0 millimeters, in particular at least 1 millimeter, in particular at least 1.5 millimeters, and/or at most 4 millimeters, in particular at most 3 millimeters, below the conveying plane of the sealing device. The distance of the top edge of the conveyor roller from the conveying plane may depend on the distance of the head edge of the sealing roller from the conveying plane. Both, the inclined folding surface and the sealing surface may be positioned below the conveying plane. Thus, folding of the sealed seam may be improved. To form the sealed seam the heated sealing surface may heat the packaging material during contact. The inclined folding surface may contact the heated sealed seam and fold it. If the sealed seam is in a warm state, it may have greater flexibility. Thus, by folding the heated sealed seam it may be avoided to damage the sealed seam by forming forces during folding.

Preferably, the conveying surface is, in particular in a side or front view, located at least partially, above a conveying plane of the sealing device. This ensures that the conveying surface contacts a non-heated area of the sealing portion and not the sealed seam. This ensures that the packaging material is not damaged when it is transported via contact with the conveyor rollers. The upper edge of the conveying surface may be located at least 1 millimeter, in particular at least 2 millimeters, and/or in particular at most 5 millimeters, in particular at most 4 millimeters, above the conveying plane. The lower edge of the conveying surface may be located 0 millimeters, in particular at least 1 millimeter, in particular at least 2 millimeters, and/or in particular at most 4 millimeters, in particular at most 3 millimeters, below the conveying plane. The conveying surface may, in particular in a side or front view, be perpendicular to the conveying plane.

Preferably, a positioning device may be provided upstream of the pair of sealing rollers to position the packaging material for the sealing step. When the packaging material is placed around the product, two edge portions of the packaging material may together form the seam portion. The positioning device may arrange the edge portions opposite one another. The opposite edge portions may together form the seam portion. The opposite edge portions may be sealed by means of the sealing rollers. Generally, the positioning device may be any device suitable for positioning the edge portions. For example, the positioning device may be a guide rail or tunnel along which the edge portions may be guided for positioning. Optionally, the positioning device may comprise one or more pairs of non-heated positioning rollers with positioning shell surfaces. The positioning rollers may be, in particular inversely, rotatable, in particular driven by a drive. The positioning device may fulfill the function of positioning the edge portions of the packaging material relative to each other.

Optionally the positioning device may move the packaging material along the running direction, e.g. when the packaging material contacts the positioning shell surfaces of the positioning rollers. The positioning rollers may exert pressure on the packaging material to move it forward. The positioning device may, in particular in a side or front view, be positioned above and/or below the conveying plane. Preferably, the positon of the positioning device relative to the conveying plane may depend on the position of the sealing roller, in particular its head edge, relative to the conveying plane. The positioning device may be on the same height as or, at least partially, higher than the head edge.

Preferably, the pair of non-heated conveyor rollers is arranged, in particular when viewed in the running direction, downstream of the pair of sealing rollers. Thus, the sealed seam may be first formed and then folded. This may further facilitate the folding process and increase the quality of the fold. If the two edge portions of the packaging material were first folded and then sealed, there would be no certainty that the sealing would be successful. In the worst case, the sealing could be deficient, e.g. incomplete or misaligned. This could have a negative impact on the durability of the packaged product on the one hand and on the aesthetics and customer acceptance on the other.

Preferably, both of the pair of non-heated conveyor rollers comprise an inclined folding surface for folding the sealed seam, in particular wherein the inclined folding surfaces are, in particular substantially, parallel. As a result, the folding of the seam portion can be further simplified and improved. It may be ensured that the sealed seam is folded precisely between the pair of conveyor rollers, in particular a first and a second conveyor roller. It may be avoided that the sealed seam is crumpled during folding. This may improve the stability and appearance of the sealing and thus the whole package.

The second conveyor roller may be shaped opposite to the first conveyor roller. The second conveyor roller may have a conveying surface having the first diameter, wherein the inclined folding surface may extend from the first diameter to a second diameter, wherein the first diameter may be greater than the second diameter. The second diameter of the second conveyor roller may be at least 50 millimeters, in particular at least 65 millimeters, in particular at least 95 millimeters, and/or at most 200 millimeters, in particular at most 175 millimeters, in particular at most 150 millimeters. The second diameter of the second conveyor roller may be at least 20 percent, in particular at least 30 percent, in particular at least 50 percent, and/or at most 100 percent, in particular at most 80 percent, in particular at most 70 percent, smaller than the first diameter. An inclination of the inclined folding surface of the second conveyor roller relative to the cylindrical conveying surface of the second conveyor roller may be at least 190 degrees, in particular at least 200 degrees, in particular at least 210 degrees, and/or at most 260 degrees, in particular at most 250 degrees, in particular at most 240 degrees.

Preferably, a gap is formed between the pair of non-heated conveyor rollers, wherein the sealed seam is guided through the gap. Thus, the sealed seam may be guided precisely through the gap and be folded in it. A fold may be provided securely. This may improve the stability and appearance of the package. Optionally, it may affect the aesthetics of the package positively. The gap may have a width, which may be at least the thickness of the sealed seam or the packaging material, in particular in an unprocessed state. For example, the thickness may be at least twice the thickness of the packaging material. The width may be at least 3 millimeters, in particular at least 5 millimeters, and/or at most 10 millimeters, in particular at most 7 millimeters.

The inclined folding surface may be cooled, in particular to approximately 20 degree Celsius, in particular to approximately 10 degree Celsius. For that purpose, the sealing device may comprise a radiator. As a result, the heated sealed seam may be folded and cooled at the same time. This may accelerate the production of the package, as there is no need to wait until the folded sealed seam has cooled down sufficiently for the package to be processed further, e.g. gripped by a gripper. In addition, it may be avoided that the warm sealed seam sticks to the inclined folding surface. This may reduce the risk of damaging the sealed seam during folding. If the folded sealed seam cools down while it is still in contact with the inclined folding surface, it may be ensured that the sealed seam remains folded even after exiting the sealing device.

The invention further relates to a tubular bag packaging machine for producing a package with a sealed seam comprising a sealing device. Thus, a packaging with a sealed seam may be produced securely. In particular, the benefits are the same as for the sealing device.

The tubular bag packaging machine may comprise a transporting device for transporting products, like for example packages with food inside or any other kind of products that need sealing with a sealing material. These products may be transported along the running direction along the transporting device. Particularly, the transporting device may be implemented as a chain conveyor or other suitable conveyor for transporting the products.

The tubular bag packaging machine may comprise a provisioning system for providing the packaging material. The provisioning system may particularly comprise a packaging material roll. The packaging material roll may be actively driven, e.g. by means of a drive, or passively driven, e.g. by traction from the positioning device and/or the pair of sealing rollers and/or the pair of conveyor rollers. Optionally, the provisioning system may comprise further elements, like deflection rolls and/or drives and/or brakes, that may facilitate and control transporting of the packaging material so that it is provided, in the region of the transporting device, above the products.

The tubular bag packaging machine may be intended to fold the packaging material around the products so that it is wrapped around the products, leaving, on the bottom side of the packages a longitudinal sealed seam where the edge portions of the packaging material, in the running direction of the products, contact each other. This may be realized by employing a forming set that may form the packaging material so as to assume the respective shape so that the sealed seam may be provided. The forming set may be a guide rail or tunnel along which the packaging material may be guided to be positioned around the product.

Downstream of the forming set in the running direction of the products, there may be provided the sealing device for sealing the edge portions to provide the sealed seam.

Downstream of the sealing device in the running direction of the products, further stations may be provided like, for example, a cross-sealing station that may apply a sealing to the packaging material that may extend in a direction substantially transverse to the running direction so as to seal the products also in the transverse direction. A cutting station comprising a cutter may be provided downstream of the sealing device or cross-sealing station. The cutter may cut the packaging material so as to provide individual packages.

The tubular bag packaging machine may further comprise a controller for controlling the processes of the tubular bag packaging machine.

The invention further relates to a method for producing a sealed seam on a packaging material, wherein the packaging material comprises a tubular portion as well as a seam portion that connects to the tubular portion, wherein the method comprises the steps of: moving the packaging material along a running direction of the sealing device, sealing the seam portion to provide a sealed seam, and folding the sealed seam from an unfolded position to a folded position. The benefits are the same as for the sealing device and the tubular bag packaging machine.

The packaging material may be positioned, in particular before being sealed. This may be achieved by means of a positioning device. When the packaging material is placed around the product, the two edge portions of the packaging material may together form the seam portion. The positioning device may arrange the edge portions opposite one another. In the unfolded position, the edge portions may be perpendicular to the running direction. In the unfolded position, the edge portions may be approximately parallel to the conveying surface of the conveyor roller.

The packaging material may be moved along the running direction of the sealing device by means of a pair of non-heated conveyor rollers. Each of the non-heated conveyor rollers may comprise a cylindrical conveying surface, which may contact the seam portion for moving the packaging material. Optionally the packaging material may be moved by means of the positioning device.

The seam portion, i.e. the opposite edge portions, may be sealed by means of a pair of heated sealing rollers.

The sealed seam may be folded by means of the conveyor rollers. At least one of the pair of non-heated conveyor rollers may comprise an inclined folding surface for folding the seam portion.

Preferably, an angle between the unfolded position and the folded position is at least 10 degrees, in particular at least 20 degrees, in particular at least 30 degrees, in particular at least 40 degrees, and/or at most 80 degrees, in particular at most 70 degrees, in particular at most 60 degrees. Thus, a fold may be provided securely. This may improve the stability and aesthetics of the package. The more the sealed seam is folded, the less likely it is that the sealed seam will be damaged during handling.

Features or explanations described with regard to one of the aspects (sealing device, tubular bag packaging machine or method) may be transferred to and combined with the other aspects.

The invention is explained in more detail below with reference to embodiments.
Figure 1 shows a schematic depiction of a tubular bag packaging machine with a sealing device from a side view according to one embodiment
Figure 2 shows a schematic depiction of a sealing device from a side view according to one embodiment,
Figure 3 shows a schematic depiction of a part of the sealing device, in particular a positioning device, from a front view according to one embodiment,
Figure 4 shows a schematic depiction of a part of the sealing device, in particular a pair of heated sealing rollers, from a front view according to one embodiment,
Figure 5 shows a schematic depiction of a part of the sealing device, in particular a pair of non-heated conveyor rollers, from a front view according to one embodiment,
Figure 6 shows a schematic depiction of a package with a sealed seam in an unfolded position, and
Figure7 shows a schematic depiction of a package with a sealed seam in a folded position.

Identical technical components are provided with the same reference signs throughout the figures.

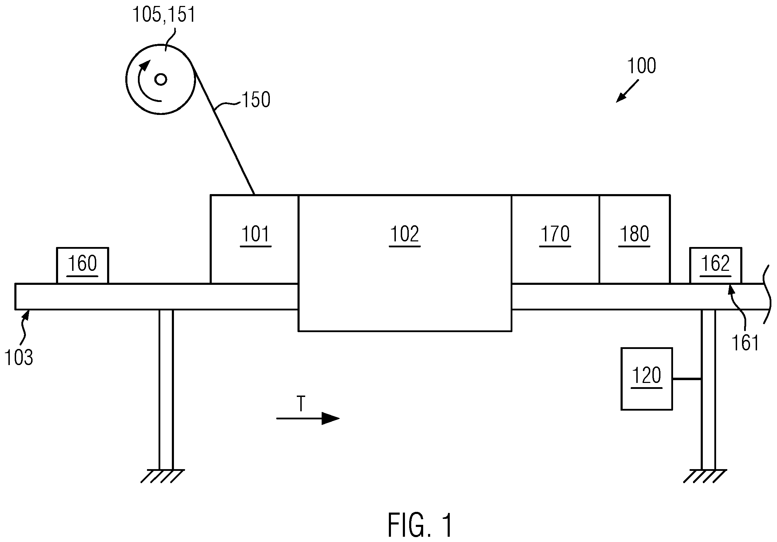

Figure 1 shows a schematic side view of a tubular bag packaging machine 100 according to one embodiment of the present disclosure. The tubular bag packaging machine 100 comprises a transporting device 103 in the form of a chain conveyor for transporting products 160. These products 160 are transported along a running direction T schematically depicted with the arrow along the tubular bag packaging machine 100.

The tubular bag packaging machine 100 further comprises a provisioning system 105 for providing the packaging material 150. The provisioning system 105 particularly comprises a packaging material roll 151 so that the packaging material 150 is provided, in the region of the transporting device 103, above the products 160. The packaging material 150 is an endless single layer plastic foil.

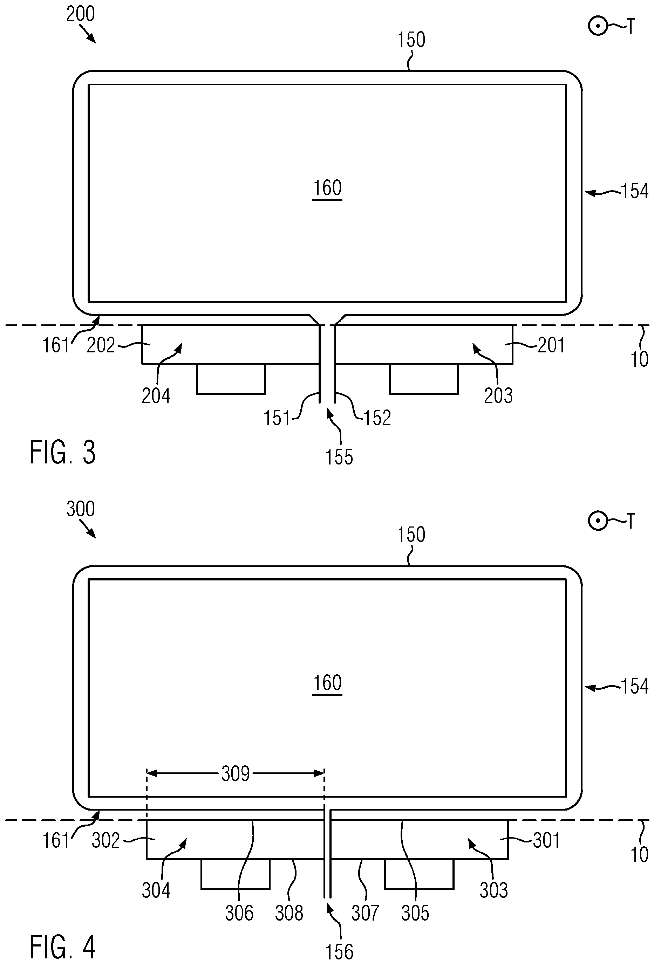

The tubular bag packaging machine 100 is intended to fold the packaging material 150 around the products 160 so that it is wrapped around the products 160, leaving, on a bottom side 161 of the produced packages 162 a sealed seam 156 where edge portions 151, 152 of the packaging material 160, in the running direction T, contact each other (cf. Figs. 4-5). The positioning of the packaging material 150 around the products 160 is realized by means of a forming set 101. The forming set 101 comprises a tunnel along which the packaging material 150 is guided to be positioned around the product 160.

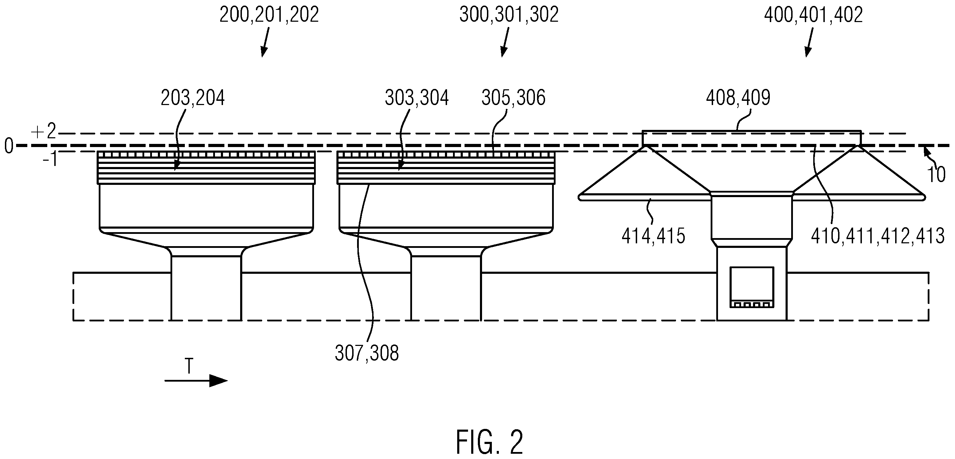

Downstream of the forming set 101, there is provided a sealing device 102 for sealing the packaging material 160 to provide the sealed seam 156. The sealing device 102 is described in detail in Figures 2-5.

Downstream of the sealing device 102 in the running direction T, a cross-sealing station 170 is provided that applies a sealing to the packaging material 150 that extends in a direction substantially transverse to the running direction T (into the drawing plane) so as to seal the packaging material 150 also in the transverse direction.

A cutting station 180 is provided downstream of the cross-sealing station 170. The cutting station 180 comprises a cutter (not shown) which cuts the packaging material 150 so as to provide individual packages 162.

The tubular bag packaging machine 100 further comprises a controller 120 for controlling the processes of the tubular bag packaging machine 100.

Figures 2 and 3 show a schematic depiction of the sealing device 102. The sealing device 102 comprises a positioning device 200, a pair of heated sealing rollers 300 and a pair of non-heated conveyor rollers 400. The positioning device 200 is positioned upstream of the pair of heated sealing rollers 300. The pair of heated sealing rollers 300 is positioned upstream of the pair of non-heated conveyor rollers 400.

The positioning device 200 comprises a pair of non-heated positioning rollers 201, 202 (cf. Fig. 3) with positioning shell surfaces 203, 204. When a tubular portion 154 of the packaging material 150 is placed around the product 160, the two edge portions 151, 152 of the packaging material 150 together form a seam portion 155, which is in the following sealed by the pair of sealing rollers 300 (cf. Fig. 4). As Fig. 3 shows, the tubular portion 154 is located above the seam portion 155. This allows for producing a sealed seam 156 on the bottom side 161 of the tubular portion 154 and thus of the produced package 162. This positively affects the aesthetics of the produced package 162.

The positioning device 200 arranges the edge portions 151, 152 opposite one another so that an accurate and symmetrical seam can be sealed. As a result, the edge portions 151, 152 are each aligned with the transport direction T, which in Figure 3 extends out of the drawing plane and extend perpendicular to a bottom side 161 of the tubular portion 154.

Additionally to the positioning function, the non-heated positioning rollers 201, 202 serve for moving the packaging material 150 along the running direction T. The positioning rollers 201, 202 exert pressure on the packaging material 150 during rotation to move it forward. As Figures 2 and 3 further illustrates, the positioning rollers 201, 202 are positioned below a conveying plane 10 directly adjacent to the conveying plane 10. The conveying plane 10 is parallel to the running direction T of the sealing device 102. Thus the positioning rollers 201, 202 contact the part of the edge portions 151, 152 of the packaging material 150 that extends below the conveying plane 10.

When the edge portions 151, 152 are arranged opposite one another, they are guided to the pair of heated sealing rollers 300 (cf. Fig. 2). The pair of heated sealing rollers 300 comprises a first sealing roller 301 and a second sealing roller 302 (cf. Fig. 4). Each of the first and second sealing rollers 301, 302 has a cylindrical shape with a third diameter 309 of 120 millimeters. The first and second sealing rollers 301, 302 each have a head edge 305, 306 and a base edge 307, 308. The first sealing roller 301 has a first sealing surface 303 and the second sealing roller 302 has a second sealing surface 304, which are defined by the head edge 305, 306 and the base edges 307, 308. The sealing surfaces 302, 303 are heated by a heater (not shown) to a melting temperature of the packaging material 150, in the present embodiment approximately 80 degree Celsius.

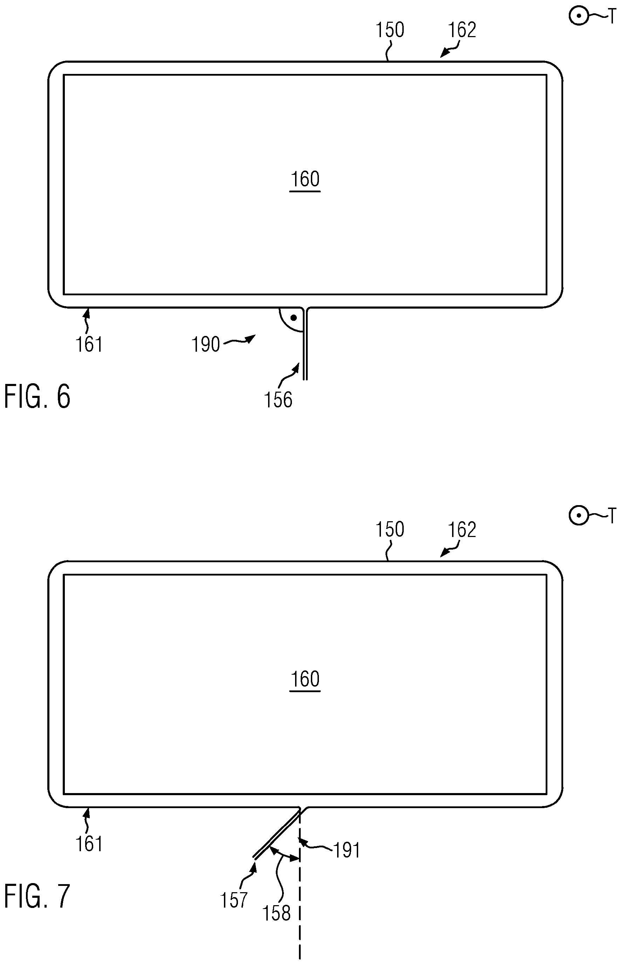

As Figure 2 illustrates, the head edge 305, 306 of the sealing rollers 301, 302 are located 1 millimeter below the conveying plane 10. The base edges 307, 308 are further below the conveying plane 10. Thus, the sealing surfaces 302, 303 extend completely below the conveying plane 10 and can contact the part of the edge portions 151, 152 that is guided below the conveying plane 10. When the edge portions 151, 152 are transported and contact the first and second sealing rollers 301, 302 the edge portions 151, 152 are sealed to form a longitudinal sealed seam 156. The sealed seam 156 extends along the running direction T and perpendicular to the bottom side 161 of the tubular portion 154 (cf. Fig. 6).

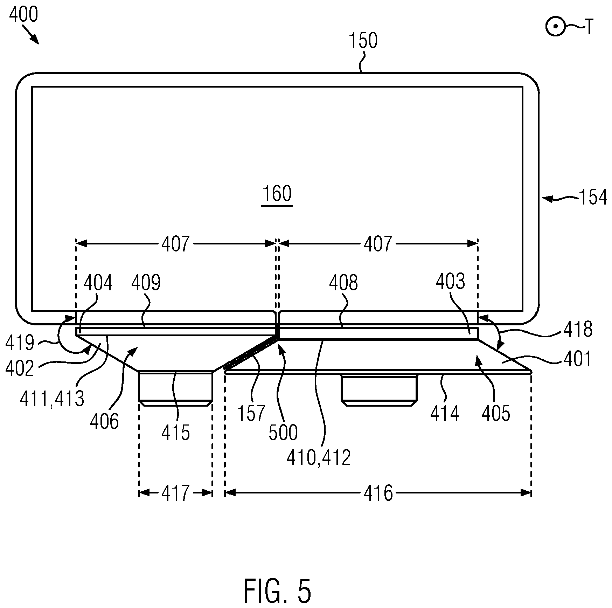

After the sealed seam 156 is provided in the seam portion 155, the sealed seam 156 is guided to the pair of non-heated conveyor rollers 400 (cf. Fig. 5). The pair of non-heated conveyor rollers 400 comprises a first conveyor roller 401 and a second conveyor roller 402. Each of the first and second conveyor rollers 401, 402 comprises a cylindrical conveying surface 403, 404 and an inclined folding surface 405, 406.

The conveying surfaces 403, 404 have a cylindrical shape and a first diameter 407 of approximately 150 millimeters. The conveying surfaces 403, 404 each have an upper edge 408, 409 and a lower edge 410, 411. The conveying surfaces 403, 404 are located at least partially above the conveying plane 10 (cf. Fig. 2). In particular, the upper edges 408, 409 are located 2 millimeters above the conveying plane 10 and the lower edges 410, 411 are located on the conveying plane 10. Thus, when the sealing portion 155 gets into contact with the rotated conveying surfaces 403, 404, the sealing portion 155 and thus the whole packaging material 150 is moved in the running direction T. Due to the positioning of the conveying surfaces 403, 404 with respect to the sealing rollers 301, 302 - in particular the head edge 305, 306 of the sealing rollers 301, 302 being distanced from the lower edges 410, 411 of the conveyor rollers 401, 402 by 1 millimeter, it is ensured that the conveying surfaces 403, 404 contact the non-heated area of the sealing portion 155 and not the sealed seam 156. This ensures that the packaging material 150 is not damaged when it is transported via contact with the conveyor rollers 401, 402.

Simultaneous to the contact between the sealing portion 155 and the conveying surfaces 403, 404, the sealed seam 156 is in contact with the inclined folding surfaces 405, 406 to be folded relative to the bottom side 161 of the tubular portion 154. The risk that a folded sealed seam 157 is deformed or crushed when handling the package 162 is reduced. This has a positive effect on the durability as well as the aesthetic of the package 162.

The inclined folding surfaces 405, 406 have top edges 412, 413 and bottom edges 414, 415. The first top edge 412 of the first inclined folding surfaces 405 and the second top edge 413 of the second inclined folding surfaces 406 each have the first diameter 407 of approximately 100 millimeters. The first bottom edge 414 of the first inclined folding surface 405 has a second diameter 416 of approximately 200 millimeters. The second bottom edge 415 of the second inclined folding surfaces 406 has a second diameter 417 of approximately 100 millimeters. Thus, the inclined folding surfaces 405, 406 have a conical shape. The inclined folding surfaces 405, 406 are inclined relative to the cylindrical conveying surfaces 403, 404 by an inclination angle 418, 419 of 120 degrees and 240 degrees respectively.

The top edges 412, 413 of the inclined folding surfaces 405, 406 overlap or correspond to the lower edges 410, 411 of the conveying surfaces 403, 404. As a result, the conveying surfaces 403, 404 are located above the inclined folding surface 405, 406. Furthermore, the top edges 412, 413 of the inclined folding surfaces 405, 406 are located on the conveying plane. Thus, the inclined folding surfaces 405, 406 are completely located below the conveying plane 10. As a consequence, the inclined folding surfaces 405, 406 can contact the warm sealed seam 156.

Furthermore, the inclined folding surfaces 405, 406 of the conveyor rollers 401, 402 are arranged next to each other in such a way that a small gap 500 of a width of five millimeters is formed there between. When the first and second conveyor rollers 401, 402 are rotated, the warm sealed seam 156 is guided through the gap 500 and folded by the inclined folding surfaces 405, 406. The gap 500 allows for precisely guiding and folding the sealed seam 156. In particular, the sealed seam 156 is folded from an unfolded position 190 as shown in Figure 6 to a folded position 191 as shown in Figure 7 by an angle 158 of 60 degrees.

Thus, the conveyor rollers 401, 402 fulfill two functions. On the one hand, they transport the packaging material 150 and on the other hand, they fold the sealed seam 156. As a result, there is no need for an additional tool for folding the sealed seam 156. This reduces the assembly space and costs as well as the complexity of the sealing device 102.

Furthermore, the inclined folding surfaces 405, 406 are cooled by a radiator (not shown) to approximately 20 degree Celsius. As a result, the heated sealed seam 156 is folded and cooled at the same time. This accelerates the production of the package 162, as there is no need to wait until the folded sealed seam 157 has cooled down sufficiently for the package 162 to be processed further. In addition, it is avoided that the warm sealed seam 156 sticks to the inclined folding surfaces 405, 406. This reduces the risk of damaging the sealed seam 156 during folding. If the folded sealed seam 157 cools down while it is still in contact with the inclined folding surfaces 405, 406, it is ensured that the folded sealed seam 157 remains folded even after exiting the sealing device 102.

## Claims

1. Sealing device (102) for producing a sealed seam (156) on a packaging material (150), wherein the sealing device (102) comprises:
- a pair of heated sealing rollers (300) for providing the sealed seam (156) in the packaging material (150), and
- a pair of non-heated conveyor rollers (400), which comprises a cylindrical conveying surface (403, 404) for moving the packaging material (150) along a running direction (T) of the sealing device (102),
wherein at least one of the pair of non-heated conveyor rollers (400) comprises an inclined folding surface (405, 406) for folding the sealed seam (156), wherein the inclined folding surface (405, 406) is inclined relative to the cylindrical conveying surface (403, 404).

2. Sealing device according to claim 1, wherein the conveying surface (403, 404) has a first diameter (407) and wherein the inclined folding surface (405, 406) extends, in particular, perpendicular to the running direction (T), from the first diameter (407) to a second diameter (416, 417), wherein the first diameter (407) is smaller than the second diameter (416, 417).

3. Sealing device according to claim 2, wherein the first diameter (407) is at least 60 millimeters, in particular at least 90 millimeters, in particular at least 125 millimeters, and/or at most 200 millimeters, in particular at most 175 millimeters, in particular at most 150 millimeters.

4. Sealing device according to claim 2 or 3, wherein the second diameter (416, 417) is at least 100 millimeters, in particular at least 120 millimeters, in particular at least 145 millimeters, and/or at most 300 millimeters, in particular at most 250 millimeters, in particular at most 200 millimeters.

5. Sealing device according to one of claims 2 to 4, wherein the second diameter (416, 417) is at least 20 percent, in particular at least 30 percent, in particular at least 50 percent, and/or at most 100 percent, in particular at most 80 percent, in particular at most 70 percent, larger than the first diameter (407).

6. Sealing device according to one of the preceding claims, wherein an inclination of the inclined folding surface (405, 406), is at least 100 degrees, in particular at least 110 degrees, in particular at least 120 degrees, and/or at most 170 degrees, in particular at most 150 degrees, in particular at most 140 degrees.

7. Sealing device according to one of the preceding claims, wherein the conveying surface (403, 404) is, in particular in a side or front view, located above the inclined folding surface (405, 406).

8. Sealing device according to one of the preceding claims, wherein the inclined folding surface (405, 406) is, in particular in a side or front view, located below a conveying plane (10) of the sealing device (102).

9. Sealing device according to one of the preceding claims, wherein the conveying surface (403, 404) is, in particular in a side or front view, located at least partially, above a conveying plane (10) of the sealing device (102).

10. Sealing device according to one of the preceding claims, wherein the pair of non-heated conveyor rollers (400) is arranged, in particular when viewed in the running direction (T), downstream of the pair of sealing rollers (300).

11. Sealing device according to one of the preceding claims, wherein both of the pair of non-heated conveyor rollers (400) comprise an inclined folding surface (405, 406) for folding the sealed seam (156), in particular wherein the inclined folding surfaces (405, 406) are, in particular substantially, parallel.

12. Sealing device according to claim 11, wherein a gap (500) is formed between the pair of non-heated conveyor rollers (400), wherein the sealed seam (156) is guided through the gap (500).

13. Tubular bag packaging machine (100) for producing a package (162) with a sealed seam (156) comprising a sealing device (102) according to any one of claims 1 to 12.

14. Method for producing a sealed seam (156) on a packaging material (150), wherein the packaging material (150) comprises a tubular portion (154) as well as a seam portion (155) that connects to the tubular portion (154), wherein the method comprises the steps of:
- moving the packaging material (150) along a running direction (T) of the sealing device (102),
- sealing the seam portion (155) to provide a sealed seam (156), and
- folding the sealed seam (156) from an unfolded position (190) to a folded position (191).

15. Method according to claim 14, wherein an angle (158) between the unfolded position (190) and the folded position (191) is at least 30 degrees, in particular at least 40 degrees, in particular at least 50 degrees, and/or at most 80 degrees, in particular at most 70 degrees, in particular at most 60 degrees.
